# EUROPEAN PATENT APPLICATION

(11) **EP 4 796 757 A1**
(43) Date of publication of application: **26.08.2026**
(21) Application number: 26158323.1
(22) Date of filing: 12.02.2026
(51) Int. Cl.: F01D 11/08, F01D 25/12, F01D 11/24

(54) **AIR-COOLED TURBINE COMPONENT, AND BLADE OUTER AIR SEAL SEGMENT**

(30) Priority: 12.02.2025 US 202563757736 P
(71) Applicant: RTX Corporation, Farmington, CT 06032 (US)
(72) Inventor: O'CONNOR, Gregory A., Portland (US); LUTJEN, Paul M., Kennebunkport (US); TRINIDAD, Pedro Peralta, Caguas (PR); PLANTE, James R., E. Waterboro (US); MONGILLO, JR., Dominic J., West Hartford (US); SWIFT, Anthony B., Waterboro (US)
(74) Representative: Dehns

(57) **Abstract**

An air-cooled turbine component includes a body (90) extending between and to a first radial surface (112) and a second radial surface (114) relative to a centerline axis. The body (90) includes an outer passage wall (126) and an inner passage wall (128) forming an internal cooling passage (116) between the first radial surface (112) and the second radial surface (114). The internal cooling passage (116) extends lengthwise through the body (90) between and to an upstream end (120) of the internal cooling passage (116) and a downstream end (122) of the internal cooling passage (116) along a lengthwise axis of the internal cooling passage (116). The body (90) forms a flow augmentation feature assembly (134) at the inner passage wall (128) within the internal cooling passage (116). The flow augmentation feature assembly (134) includes a plurality of trip strips (144) arranged in a ladder pattern (146) along the inner passage wall (128).

Blade outer air seal (BOAS) segments are provided as the air-cooled turbine component.

## Description

This invention was made with Government support under Contract N00019-21-G-0005, D.O. N00019-23 F-0019 awarded by the United States Navy. The Government has certain rights in this invention.

### TECHNICAL FIELD

This disclosure relates generally to gas turbine engines for aircraft propulsion systems and, more particularly, to blade outer air seal (BOAS) assemblies for a turbine section of a gas turbine engine.

### BACKGROUND

Gas turbine engines for aircraft propulsion systems may typically include a turbine section including at least one bladed rotor configured to drive rotation of an engine spool in response to a combustion gas flow. This bladed rotor may be surrounded by a blade outer air seal (BOAS) assembly configured to facilitate combustion gas path sealing at blade tips of the bladed rotor. Various BOAS assembly configurations are known in the art. While these known BOAS assembly configurations may be suitable for their intended purposes, there is always room in the art for improvement.

### SUMMARY

According to an aspect of the present disclosure, an air-cooled turbine component includes a body extending between and to a first radial surface and a second radial surface relative to a centerline axis. The body includes an outer passage wall and an inner passage wall forming an internal cooling passage between the first radial surface and the second radial surface. The internal cooling passage extends lengthwise through the body between and to an upstream end of the internal cooling passage and a downstream end of the internal cooling passage along a lengthwise axis of the internal cooling passage. The body forms a flow augmentation feature assembly at the inner passage wall within the internal cooling passage. The flow augmentation feature assembly includes a plurality of trip strips arranged in a ladder pattern along the inner passage wall.

In any of the aspects or embodiments described above and herein, the ladder pattern may be a skewed ladder pattern.

In any of the aspects or embodiments described above and herein, the internal cooling passage may have a width substantially orthogonal to the lengthwise axis and the width may decrease in a lengthwise direction from the upstream end to the downstream end.

In any of the aspects or embodiments described above and herein, the internal cooling passage may have a height between the outer passage wall and the inner passage wall, and the flow augmentation feature assembly may extend between 10 percent and 30 percent of the height from the inner passage wall toward the outer passage wall.

In any of the aspects or embodiments described above and herein, the plurality of trip strips arranged in the ladder pattern may include a plurality of first trip strips and a plurality of second trip strips, the plurality of first trip strips may be oriented parallel to one another and spaced along the lengthwise axis, the plurality of second trip may be oriented parallel to one another and perpendicular to the plurality of first trip strips, and a first array of the trip strips may be disposed between and adjacent pair of the first trip strips.

In any of the aspects or embodiments described above and herein, each of the second trip strips of the first array may extend lengthwise between the adjacent pair of the first trip strips.

In any of the aspects or embodiments described above and herein, each of the second trip strips of the first array may be spaced from the adjacent pair of the first trip strips.

In any of the aspects or embodiments described above and herein, the ladder pattern may extend from the upstream end to the downstream end.

In any of the aspects or embodiments described above and herein, the body may form an inlet aperture at the upstream end, and the inlet aperture may extend between and to the outer radial surface and the internal cooling passage.

In any of the aspects or embodiments described above and herein, the body may form an outlet aperture at the downstream end, and the outlet aperture may extend between and to the internal cooling passage and an exterior of the body.

According to another aspect of the present disclosure, a blade outer air seal (BOAS) segment includes a segment body extending between and to an outer radial surface and an inner radial surface relative to a BOAS axis. The segment body includes an outer passage wall, an inner passage wall, a first lateral side wall, and a second lateral side wall forming an internal cooling passage between the outer radial surface and the inner radial surface. The internal cooling passage extends lengthwise through the segment body between and to an upstream end of the internal cooling passage and a downstream end of the internal cooling passage along a lengthwise axis of the internal cooling passage. The internal cooling passage extends widthwise between and to the first lateral side wall and the second lateral side wall. The segment body forms a flow augmentation feature assembly at the inner passage wall within the internal cooling passage. The flow augmentation feature assembly includes a plurality of trip strips arranged in a ladder pattern along the inner passage wall extending between and to the first lateral side wall and the second lateral side wall.

In any of the aspects or embodiments described above and herein, the internal cooling passage may have a width between the first lateral side wall and the second lateral side wall, the width may be substantially orthogonal to the lengthwise axis, and the width may decrease in a lengthwise direction from the upstream end to the downstream end.

In any of the aspects or embodiments described above and herein, the internal cooling passage may have a height between the outer passage wall and the inner passage wall, and the flow augmentation feature assembly may extend between 10 percent and 30 percent of the height from the inner passage wall toward the outer passage wall.

In any of the aspects or embodiments described above and herein, the plurality of trip strips arranged in the ladder pattern may include a plurality of first trip strips and a plurality of second trip strips, the plurality of first trip strips may be oriented parallel to one another and oblique to the first lateral side wall and the second lateral side wall, the first plurality of first trip strips may extend between and to the first lateral side wall and the second lateral side wall, and the plurality of second trip may be oriented parallel to one another and perpendicular to the plurality of first trip strips.

In any of the aspects or embodiments described above and herein, the ladder pattern may be a skewed ladder pattern.

According to another aspect of the present disclosure, a blade outer air seal (BOAS) segment includes a segment body extending between and to an outer radial surface and an inner radial surface relative to a BOAS axis. The segment body includes an outer passage wall and an inner passage wall forming an internal cooling passage between the outer radial surface and the inner radial surface. The segment body forms a flow augmentation feature assembly at the inner passage wall within the internal cooling passage. The flow augmentation feature assembly includes a plurality of trip strips arranged in a ladder pattern along the inner passage wall. The plurality of trip strips arranged in the ladder pattern includes a plurality of first trip strips and a plurality of second trip strips. The plurality of first trip strips is oriented parallel to and spaced from one another. The plurality of second trip strips is oriented parallel to one another and perpendicular to the plurality of first trip strips. The plurality of second trip strips arranged as a plurality of arrays of the second trip strips. Each array of the plurality of arrays includes a subset plurality of the plurality of second trip strips. Each array of the plurality of arrays is disposed between a respective pair of adjacent first trip strips of the plurality of first trip strips.

In any of the aspects or embodiments described above and herein, the segment body may extend circumferentially between a first circumferential end and a second circumferential end relative to the BOAS axis, and the internal cooling passage may extend lengthwise between the first circumferential end and the second circumferential end.

In any of the aspects or embodiments described above and herein, the internal cooling passage may have a height between the outer passage wall and the inner passage wall, and the plurality of first trip strips and the plurality of second trip strips may extend between 10 percent and 30 percent of the height from the inner passage wall toward the outer passage wall.

In any of the aspects or embodiments described above and herein, the segment body may include a first lateral side wall and a second lateral side wall further forming the internal cooling passage, the internal cooling passage may extend widthwise between the first lateral side wall and the second lateral side wall, and each of the plurality of first trip strips may extend between and to the first lateral side wall and the second lateral side wall.

In any of the aspects or embodiments described above and herein, the internal cooling passage may extend between and to an upstream end and a downstream end, the internal cooling passage may have a width, and the width may decrease from the upstream end to the downstream end.

The foregoing features and elements may be combined in various combinations without exclusivity, unless expressly indicated otherwise. For example, aspects and/or embodiments of the present disclosure may include any one or more of the individual features or elements disclosed above and/or below alone or in any combination thereof. These features and elements as well as the operation thereof will become more apparent in light of the following description and the accompanying drawings. It should be understood, however, the following description and drawings are intended to be exemplary in nature and non-limiting.

### BRIEF DESCRIPTION OF THE DRAWINGS

FIG. 1 illustrates propulsion systems for an aircraft, in accordance with one or more embodiments of the present disclosure.
FIG. 2 schematically illustrates a cutaway, side view of an aircraft propulsion system including a gas turbine engine, in accordance with one or more embodiments of the present disclosure.
FIG. 3 schematically illustrates a cutaway, side view of a portion of a turbine section of a gas turbine engine including a blade outer air seal (BOAS) assembly, in accordance with one or more embodiments of the present disclosure.
FIG. 4 schematically illustrates cutaway, side view of a BOAS segment for the BOAS assembly, in accordance with one or more embodiments of the present disclosure.
FIG. 5 schematically illustrates a cutaway, bottom view of the BOAS segment, in accordance with one or more embodiments of the present disclosure.
FIG. 6 schematically illustrates an internal cooling passage and a flow augmentation feature assembly for the BOAS segment, in accordance with one or more embodiments of the present disclosure.
FIG. 7 schematically illustrates the internal cooling passage and another flow augmentation feature assembly for the BOAS segment, in accordance with one or more embodiments of the present disclosure.

### DETAILED DESCRIPTION

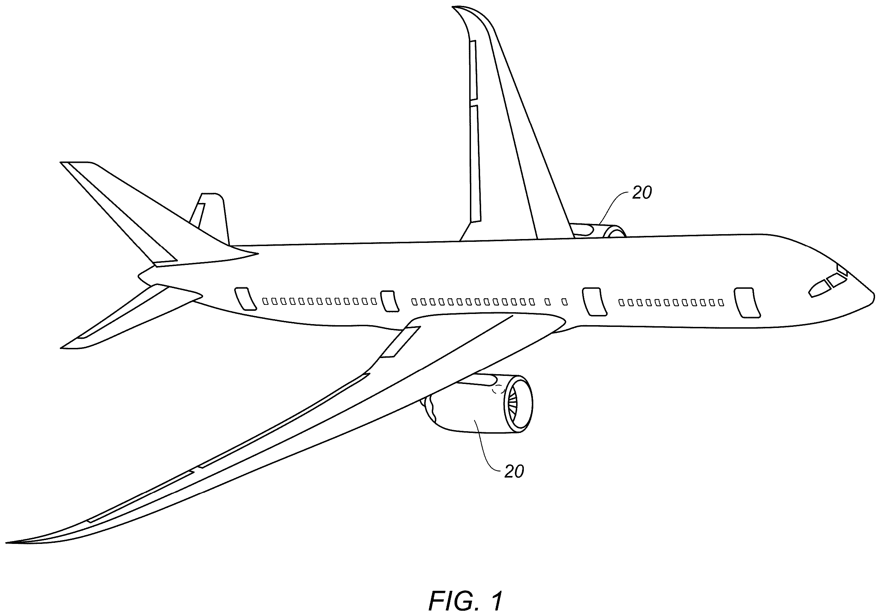

FIG. 1 illustrates a propulsion system 20 for an aircraft. Briefly, the aircraft may be a fixed-wing aircraft (e.g., an airplane), a rotary-wing aircraft (e.g., a helicopter), a tilt-rotor aircraft, a tilt-wing aircraft, or another aerial vehicle. Moreover, the aircraft may be a manned aerial vehicle or an unmanned aerial vehicle (UAV, e.g., a drone).

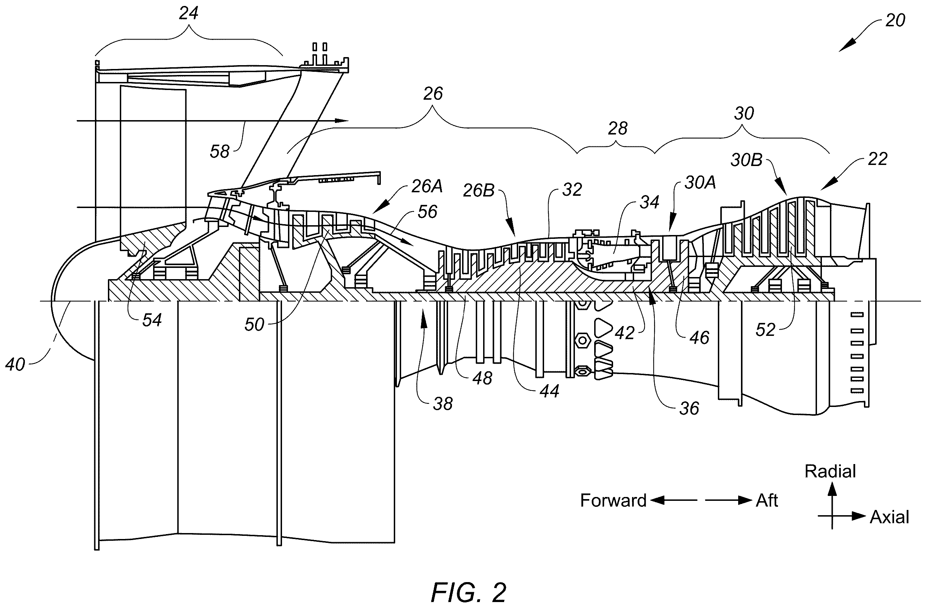

FIG. 2 schematically illustrates a cutaway, side view of the propulsion system 20. The propulsion system 20 includes a gas turbine engine 22. The gas turbine engine 22 of FIG. 2 is configured as a multi-spool turbofan gas turbine engine. However, while the following description and accompanying drawings may refer to the turbofan gas turbine engine of FIG. 2 as an example, it should be understood that aspects of the present disclosure may be equally applicable to other types of gas turbine engines including, but not limited to, a turboshaft gas turbine engine, a turboprop gas turbine engine, a turbojet gas turbine engine, a propfan gas turbine engine, or an open rotor gas turbine engine.

The gas turbine engine 22 of FIG. 2 includes a fan section 24, a compressor section 26, a combustor section 28, a turbine section 30, and an engine static structure 32. The compressor section 26 includes a low-pressure compressor (LPC) 26A and a high-pressure compressor (HPC) 26B. The combustor section 28 includes a combustor 34 (e.g., an annular combustor). The turbine section 30 includes a high-pressure turbine (HPT) 30A and a low-pressure turbine (LPT) 32B.

Components of the fan section 24, the compressor section 26, and the turbine section 30 form a first rotational assembly 36 (e.g., a high-pressure spool) and a second rotational assembly 38 (e.g., a low-pressure spool) of the gas turbine engine 22. The first rotational assembly 36 and the second rotational assembly 38 are mounted for rotation about a rotational axis 40 (e.g., an axial centerline) of the gas turbine engine 22 relative to the engine static structure 32.

The first rotational assembly 36 includes a first shaft 42, a bladed first compressor rotor 44 for the high-pressure compressor 26B, and a bladed first turbine rotor 46 for the high-pressure turbine 30A. The first shaft 42 interconnects the bladed first compressor rotor 44 and the bladed first turbine rotor 46.

The second rotational assembly 38 includes a second shaft 48, a bladed second compressor rotor 50 for the low-pressure compressor 26A, a bladed second turbine rotor 52 for the low-pressure turbine 30B, and a bladed fan rotor 54 for the fan section 24. The second shaft 48 of FIG. 2 interconnects the bladed second compressor rotor 50, the bladed second turbine rotor 52, and the bladed fan rotor 54. The bladed fan rotor 54 may alternatively be connected to the second shaft 48 by a gear train (e.g., a reduction gear assembly) configured to drive rotation of the bladed fan rotor 54 at a different rotational speed than the second shaft 48. The first shaft 42 and the second shaft 48 are concentric and configured to rotate about the rotational axis 40. The present disclosure, however, is not limited to concentric configurations of the first shaft 42 and the second shaft 48.

The engine static structure 32 may include one or more engine cases, cowlings, bearing assemblies, and/or other non-rotating structures configured to house and/or support (e.g., rotationally support) components of the gas turbine engine 22 sections 24, 26, 28, 30.

In operation of the gas turbine engine 22 of FIG. 2, ambient air is directed through the fan section 24 and into a core flow path 56 (e.g., an annular flow path) and a bypass flow path 58 (e.g., an annular flow path) facilitated by rotation of the bladed fan rotor 54. Airflow along the core flow path 56 is compressed by the low-pressure compressor 26A and the high-pressure compressor 26B, mixed and burned with fuel in the combustor 34, and then directed through the high-pressure turbine 30A and the low-pressure turbine 30B. The bladed first turbine rotor 46 and the bladed second turbine rotor 52 rotationally drive the first rotational assembly 36 and the second rotational assembly 38, respectively, in response to the combustion gas flow through the high-pressure turbine 30A and the low-pressure turbine 30B. The bypass flow path 58 may be disposed outside the engine static structure 32. For example, the engine static structure 32 and an outer aircraft propulsion system housing (e.g., a nacelle) may form an annular bypass duct radially therebetween, and airflow may be directed through the annular bypass duct along the bypass flow path 58.

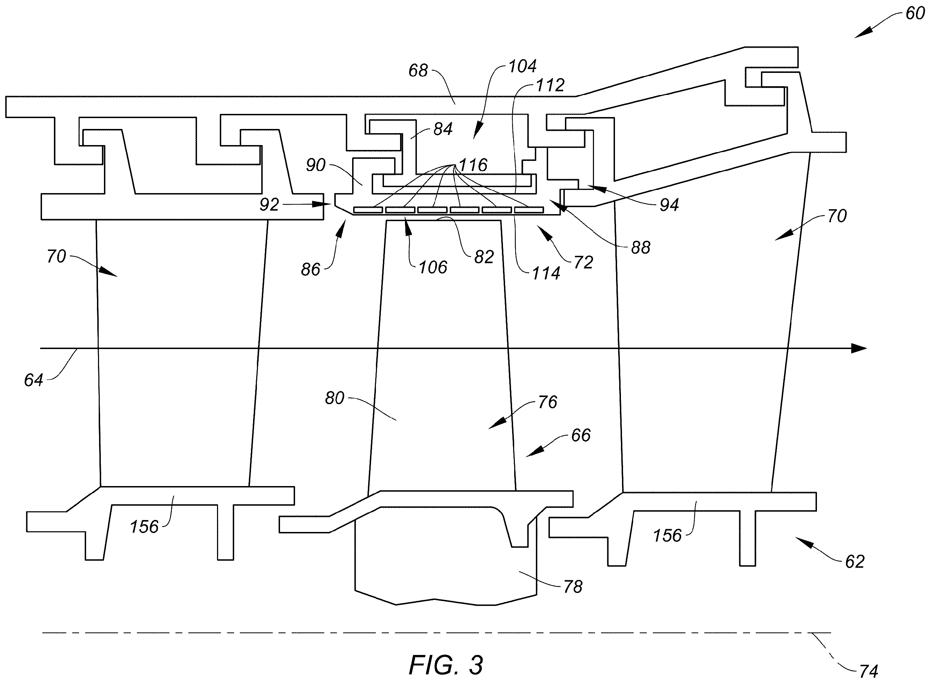

FIG. 3 schematically illustrates a cutaway, side view of a portion of a turbine section 60 for a gas turbine engine, such as the gas turbine engine 22 (see FIG. 2). The portion of the turbine section 60 illustrated in FIG. 3 includes portions of a turbine 62 such as, but not limited to, the high-pressure turbine 30A or the low-pressure turbine 30B (see FIG. 2). The turbine section 60 and its turbine 62 form a portion of a core flow path 64 of the gas turbine engine (e.g., the core flow path 56; see FIG. 2). The turbine 62 includes a bladed turbine rotor 66, a turbine case 68, one or more stator vane stages 70, and at least one blade outer air seal (BOAS) assembly 72 along the core flow path 64.

The bladed turbine rotor 66 is mounted for rotation about a rotational axis 74 of the gas turbine engine. The bladed turbine rotor 66 includes one or more rotor stages 76 (e.g., axially arrayed rotor stages). Each of the rotor stages 76 includes a rotor disk 78 and a plurality of rotor blades 80 (e.g., airfoils) disposed on and circumferentially distributed about the rotor disk 78. Each of the rotor blades 80 extends radially outward from the rotor disk 78 to a blade tip 82 at an outer radial end of each respective one of the rotor blades 80.

The turbine case 68 extends circumferentially about (e.g., completely around) the rotational axis 74. The turbine case 68 may be configured as a generally cylindrical, full-hoop case of an engine static structure (e.g., the engine static structure 32) of the gas turbine engine. The turbine case 68 may be formed by a single case body. Alternatively, the turbine case 68 may be formed by two or more case segments (e.g., circumferential segments) assembled together to form the turbine case 68 (e.g., a split case configuration). The turbine case 68 circumscribes the bladed turbine rotor 66, the stator vane stages 70, and the BOAS assembly.

The turbine 62 may include one of the stator vane stages 70 between one, more than one, or each axially adjacent pair of the rotor stages 76. The turbine 62 may additionally include stator vane stages 70 at (e.g., on, adjacent, or proximate) an upstream end and/or a downstream end of the turbine 62. Each of the stator vane stages 70 includes a plurality of stator vanes disposed within the core flow path 64 and circumferentially arrayed about the rotational axis 74. The stator vanes are configured to guide core air flow along the core flow path 64 and to direct the core air flow, for example, onto the rotor blades 80 of an immediately downstream one of the rotor stages 76.

The turbine 62 includes a BOAS assembly 72 for one, more than one, or each of the rotor stages 76. The BOAS assembly 72 is mounted on or otherwise disposed at (e.g., on, adjacent, or proximate) the turbine case 68 axially coincident with and circumscribing a respective one of the rotor stages 76. The BOAS assembly 72 forms and controls a blade tip clearance (e.g., a radial gap) between the blade tip 82 of the rotor blades 80 of a respective one of the rotor stages 76 and the BOAS assembly 72, as will be discussed in further detail below. The BOAS assembly 72, positioned in close proximity to the blade tip 82 of the passing rotor blades 80, facilitates sealing between the rotor blades 80 and the turbine case 68, thereby improving turbine 62 efficiency by reducing air flow leakage around the blade tip 82. The BOAS assembly 72 includes a BOAS support 84 and BOAS 86. The BOAS support 84 couples or otherwise secures the BOAS 86 to the turbine case 68. The BOAS 86 includes a plurality of arcuate BOAS segments 88. The BOAS segments 88 are arranged together in circumferential series about (e.g., completely around) the rotational axis 74 to form the BOAS 86.

Referring to FIGS 3-5, each of the BOAS segments 88 includes a segment body 90. The segment body 90 extends axially between and to a first axial end 92 (e.g., a forward and/or upstream axial end) of the segment body 90 and a second axial end 94 (e.g., an aft and/or downstream axial end) of the segment body 90. The segment body 90 extends circumferentially between and to a first circumferential end 96 of the segment body 90 and a second circumferential end 98 of the segment body 90. The first circumferential end 96 forms a blade arrival edge (BAE) 100 of the segment body 90. The blade arrival edge 100 may be understood as the circumferential portion of the segment body 90 at which the passing rotor blades 80 arrive first when rotating about the rotational axis 74. The second circumferential end 98 forms a blade departure edge (BDE) 102 of the segment body 90, opposite the blade arrival edge 100. The segment body 90 extends radially between and to an outer radial side 104 of the segment body 90 and an inner radial side 106 of the segment body 90. The segment body 90 forms an outer radial surface 112 and an inner radial surface 114. The segment body 90 extends radially between and to the outer radial surface 112 and the inner radial surface 114. The outer radial surface 112 is a radially outward facing surface (e.g., facing the turbine case 68 and the BOAS support 84). The inner radial surface 114 extends along and forms the inner radial side 106. The inner radial surface 114 is a radially inward facing surface disposed adjacent and facing the blade tips 82 of the passing rotor blades 80.

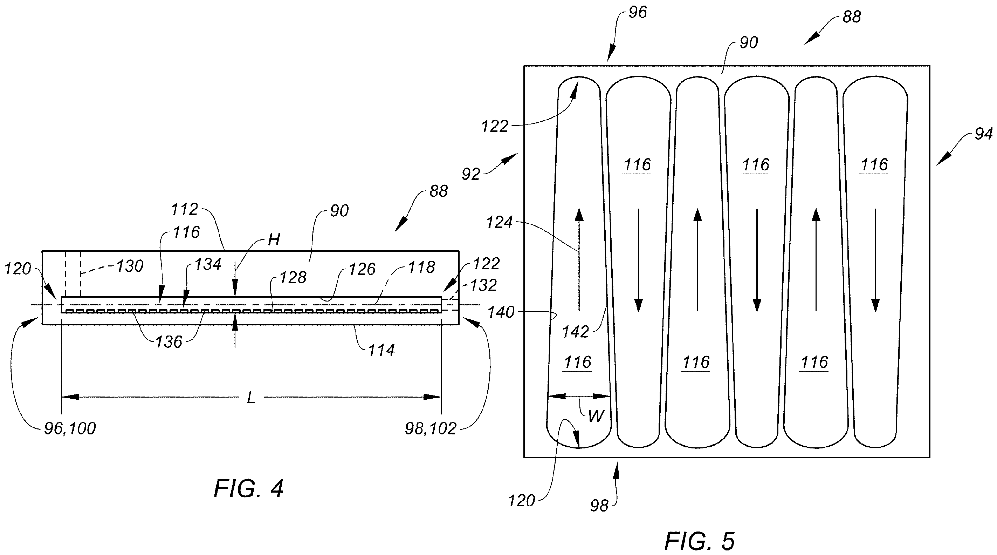

The segment body 90 forms at least one internal cooling passage 116. The segment body 90 of FIGS. 3-5 includes six internal cooling passages 116; however, the present disclosure is not limited to any particular quantity of the internal cooling passage(s) 116. The internal cooling passage 116 is disposed between (e.g., radially between) the outer radial surface 112 and the inner radial surface 114. The internal cooling passage 116 may extend through the segment body 90 in proximity to the inner radial side 106 to facilitate cooling of the segment body 90 and, in particular, portions of the segment body 90 exposed to combustion gas flowing along the core flow path 64. The internal cooling passage 116 extends lengthwise through the segment body 90 along a lengthwise axis 118. The internal cooling passage 116 extends along the lengthwise axis 118 between and to an upstream end 120 of the internal cooling passage 116 and a downstream end 122 of the internal cooling passage 116. The terms "upstream" and "downstream," used with respect to the upstream end 120 and the downstream end 122, respectively, refer to a typical direction of air flow 124 through the internal cooling passage 116 (e.g., in a lengthwise direction). The internal cooling passage 116 may extend lengthwise in the circumferential direction as shown, for example, in FIGS. 4 and 5. For example, the upstream end 120 may be disposed at (e.g., on, adjacent, or proximate) one of the first circumferential end 96 or the second circumferential end 98 and the downstream end 122 may be disposed at (e.g., on, adjacent, or proximate) the other of the first circumferential end 96 or the second circumferential end 98. The internal cooling passage 116 may alternatively extend lengthwise in the axial direction (e.g., between the first axial end 92 and the second axial end 94) or another suitable direction through the segment body 90. The internal cooling passage 116 has a length L extending in the lengthwise direction (e.g., along the lengthwise axis 118) between the upstream end 120 and the downstream end 122.

The segment body 90 forms the internal cooling passage 116 between (e.g., radially between) an outer passage wall 126 of the segment body 90 and an inner passage wall 128 of the segment body 90. The outer passage wall 126 and the inner passage wall 128 may be oriented parallel or substantially parallel to one another as shown, for example, in FIG. 4. The present disclosure, however, is not limited to this foregoing exemplary orientation of the outer passage wall 126 and the inner passage wall 128. The internal cooling passage 116 has a height H extending between (e.g., radially between) the outer passage wall 126 and the inner passage wall 128, which height H may be understood as substantially orthogonal to the lengthwise axis 118. The segment body 90 further forms the internal cooling passage 116 between a first lateral side wall 140 of the segment body 90 and a second lateral side wall 142 of the segment body 90. The internal cooling passage 116 has a width W extending between the first lateral side wall 140 and the second lateral side wall 142, which width W may be understood as substantially orthogonal to the lengthwise axis 118. As shown in FIG. 5, the width W may decrease in the lengthwise direction from the upstream end 120 to the downstream end 122. The internal cooling passage 116 is connected in fluid communication with an inlet aperture 130 and an outlet aperture 132. The inlet aperture 130 is configured to supply the air flow 124 to the internal cooling passage 116 from a pressurized air source such as, but not limited to, a compressor section (e.g., a bleed air from the compressor section 26) of the gas turbine engine. The inlet aperture 130 of FIG. 4 extends, for example, between and to the outer radial surface 112 and the internal cooling passage 116 at (e.g., on, adjacent, or proximate) the upstream end 120. The outlet aperture 132 extends between the internal cooling passage 116, at (e.g., on, adjacent, or proximate) the downstream end 122, and an exterior of the segment body 90, for example, on the first circumferential end 96 or the second circumferential end 98. The segment body 90 may additionally form one or more cooling apertures extending between intermediate portions of the internal cooling passage 116 (e.g., between the upstream end 120 and the downstream end 122) and the exterior of the segment body 90 to facilitate BOAS segment 88 cooling.

The segment body 90 additionally forms a flow augmentation feature assembly 134 on the inner passage wall 128 within the internal cooling passage 116. The flow augmentation feature assembly 134 includes a plurality of flow augmentation features 136 such as, but not limited to, trip strips, pin fins, and other protruding flow augmentation structures, as will be discussed in further detail below. The flow augmentation feature assembly 134 (e.g., the flow augmentation features 136) projects outward (e.g., radially outward) from the inner passage wall 128 toward the outer passage wall 126 to turbulate the air flow 124 through the internal cooling passage 116 and facilitate air cooling of the segment body 90 (e.g., portions of the segment body 90 between the internal cooling passage 116 and the inner radial surface 114). For example, the flow augmentation feature assembly 134 (e.g., the flow augmentation features 136) may extend between 10 percent (10%) and 30 percent (30%) of the height H from the inner passage wall 128 toward the outer passage wall 126 to facilitate suitable turbulation of the air flow 124 while also facilitating sufficient flow rate of the air flow 124 through the internal cooling passage 116. While the present disclosure internal cooling passage 116 and flow augmentation feature assembly 134 are described herein with respect to the segment body 90, it should be understood that aspects of the present disclosure may be equally applicable to other air-cooled turbine components. For example, aspects of the present disclosure may be additionally or alternatively incorporated in air-cooled turbine components such as, but not limited to, stator vane platforms 156 of the stator vane stages 70 (see FIG. 3) to facilitate air cooling of the stator vane platforms 156.

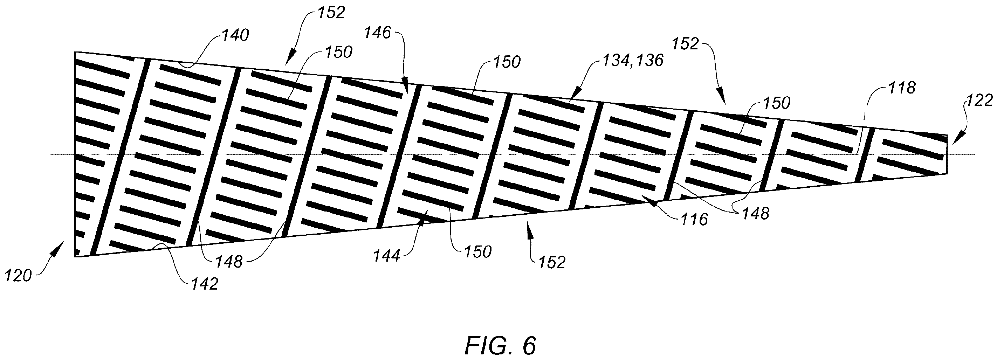

Referring to FIG. 6, the flow augmentation features 136 include a plurality of trip strips 144. The trip strips 144 are arranged as a ladder pattern 146 of the flow augmentation feature assembly 134. The ladder pattern 146 of the trip strips 144 extends lengthwise between the upstream end 120 and the downstream end 122. For example, the ladder pattern 146 may extend all or a substantial portion of the length L. Similarly, the ladder pattern 146 extends widthwise between the first lateral side wall 140 and the second lateral side wall 142, for example, all or a substantial portion of the width W. The trip strips 144 of the ladder pattern 146 form a plurality of first trip strips 148 and a plurality of second trip strips 150. The first trip strips 148 are oriented substantially parallel to one another and oblique to the first lateral side wall 140 and the second lateral side wall 142. The first trip strips 148 are spaced (e.g., equidistantly spaced) from one another primarily in the lengthwise direction of the internal cooling passage 116. The first trip strips 148 extend lengthwise between the first lateral wall 140 and the second lateral wall 142. For example, the first trip strips 148 may each extend between and contact the first lateral wall 140 and the second lateral wall 142. The second trip strips 150 are oriented parallel to one another and oblique to the first lateral side wall 140 and the second lateral side wall 142. The second trip strips 150 may be oriented perpendicular or substantially perpendicular to the first trip strips 148. The second trip strips 150 are arranged as a plurality of arrays 152 of the second trip strips 150 with each of the arrays 152 including a subset plurality of the second trip strips 150. The second trip strips 150 within each of the arrays 152 are spaced (e.g., equidistantly spaced) from one another primarily in the widthwise direction of the internal cooling passage 116. Each of the arrays 152 is disposed adjacent at least one of the first trip strips 148. For example, one of the arrays 152 may be disposed between each adjacent pair of the first trip strips 148. Each of the second trip strips 150 within the arrays 152 may extend lengthwise between and spaced from the adjacent pair of first trip strips 148. The first trip strips 148 and the second trip strips 150 may have a same height (e.g., from the inner passage wall 128 toward the outer passage wall 126). Alternatively, in some embodiments, the first trip strips 148 and the second trip strips 150 may have a different height.

During operation of the turbine section 60 and absent the flow augmentation feature assembly 134, the air flow 124 through the internal cooling passage 116 may transition from a turbulent and/or chaotic (e.g., at the inlet aperture 130) toward a patterned and/or spiraling flow within the internal cooling passage 116. This transition of the air flow 124 to the patterned and/or spiraling flow reduces heat transfer from the segment body 90 to the air flow 124. The ladder pattern 146 of the flow augmentation feature assembly 136 promotes the turbulent and/or chaotic characteristics of the air flow 124 along the length L of the internal cooling passage 116 and prevents the air flow 124 from transitioning to the patterned and/or spiraling flow, thereby improving air cooling of the segment body 90 and localized oxidation capability along the entire length L.

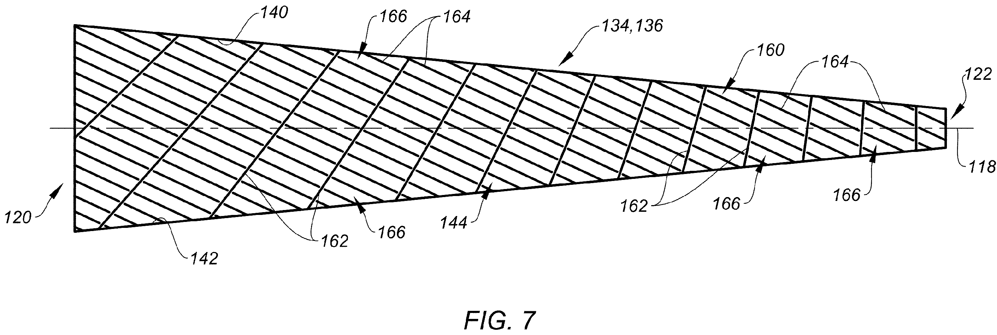

Referring to FIG. 7, in some embodiments, the trip strips 144 may arranged as a skewed ladder pattern 160 of the flow augmentation feature assembly 134. The skewed ladder pattern 160 of the trip strips 144 extends lengthwise between the upstream end 120 and the downstream end 122. For example, the skewed ladder pattern 160 may extend all or a substantial portion of the length L. Similarly, the skewed ladder pattern 160 extends widthwise between the first lateral side wall 140 and the second lateral side wall 142, for example, all or a substantial portion of the width W. The trip strips 144 of the skewed ladder pattern 160 form a plurality of first trip strips 162 and a plurality of second trip strips 164. The first trip strips 162 are spaced from one another primarily in the lengthwise direction of the internal cooling passage 116. The first trip strips 162 extend lengthwise between the first lateral wall 140 and the second lateral wall 142. For example, the first trip strips 162 may each extend between and contact the first lateral wall 140 and the second lateral wall 142. The first trip strips 162 are disposed with a lengthwise orientation which changes between successive trip strips of the first trip strips 162 from the upstream end 120 to the downstream end 122. For example, as shown in FIG. 7, each successive trip strip of the first trip trips 162, in the lengthwise direction from the upstream end 120 to the downstream end 122, may be decreasingly oriented in the lengthwise direction (e.g., relative to the lengthwise axis 118) and increasingly oriented in the widthwise direction (e.g., between the first lateral side wall 140 and the second lateral side wall 142), relative to the preceding one of the first trip strips 162 in the lengthwise direction from the upstream end 120 to the downstream end 122. This skewed orientation of the first trip strips 162 of the skewed latter pattern 160 prevents or facilitates a reduction of the spiraling flow within the internal cooling passage 116. The second trip strips 164 are oriented parallel to one another and oblique to the first lateral side wall 140 and the second lateral side wall 142. The second trip strips 164 are arranged as a plurality of arrays 166 of the second trip strips 164 with each of the arrays 166 including a subset plurality of the second trip strips 164. The second trip strips 164 within each of the arrays 166 are spaced (e.g., equidistantly spaced) from one another primarily in the widthwise direction of the internal cooling passage 116. Each of the arrays 166 is disposed adjacent at least one of the first trip strips 162. For example, one of the arrays 166 may be disposed between each adjacent pair of the first trip strips 162. Each of the second trip strips 164 within the arrays 166 may extend lengthwise between and spaced from the adjacent pair of first trip strips 162.

While the principles of the disclosure have been described above in connection with specific apparatuses and methods, it is to be clearly understood that this description is made only by way of example and not as limitation on the scope of the disclosure. Specific details are given in the above description to provide a thorough understanding of the embodiments. However, it is understood that the embodiments may be practiced without these specific details.

It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this disclosure by way of reference). It is noted that these connections are general and, unless specified otherwise, may be direct or indirect and that this specification is not intended to be limiting in this respect. Any reference to attached, fixed, connected or the like may include permanent, removable, temporary, partial, full and/or any other possible attachment option.

The terms "substantially," "about," "approximately," and other similar terms of approximation used throughout this patent application are intended to encompass variations or ranges that are reasonable and customary in the relevant field. These terms should be construed as allowing for variations that do not alter the basic essence or functionality of the invention. Such variations may include, but are not limited to, variations due to manufacturing tolerances, materials used, or inherent characteristics of the elements described in the claims, and should be understood as falling within the scope of the claims unless explicitly stated otherwise.

No element, component, or method step in the present disclosure is intended to be dedicated to the public regardless of whether the element, component, or method step is explicitly recited in the claims. No claim element herein is to be construed under the provisions of 35 U.S.C. 112(f) unless the element is expressly recited using the phrase "means for." As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the disclosures may be described and illustrated herein as embodied in combination in the exemplary embodiments, these various aspects, concepts, and features may be used in many alternative embodiments, either individually or in various combinations and sub-combinations thereof. Unless expressly excluded herein all such combinations and sub-combinations are intended to be within the scope of the present application. Still further, while various alternative embodiments as to the various aspects, concepts, and features of the disclosures--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements.

## Claims

1. An air-cooled turbine component comprising:
a body extending between and to a first radial surface and a second radial surface relative to a centerline axis, the body including an outer passage wall and an inner passage wall forming an internal cooling passage between the first radial surface and the second radial surface, the internal cooling passage extending lengthwise through the body between and to an upstream end of the internal cooling passage and a downstream end of the internal cooling passage along a lengthwise axis of the internal cooling passage, the body forming a flow augmentation feature assembly at the inner passage wall within the internal cooling passage, the flow augmentation feature assembly including a plurality of trip strips arranged in a ladder pattern along the inner passage wall.

2. The air-cooled turbine component of claim 1, wherein the ladder pattern is a skewed ladder pattern.

3. The air-cooled turbine component of claim 1 or 2, wherein the internal cooling passage has a width substantially orthogonal to the lengthwise axis and the width decreases in a lengthwise direction from the upstream end to the downstream end.

4. The air-cooled turbine component of claim 1, 2 or 3, wherein the internal cooling passage has a height between the outer passage wall and the inner passage wall, and the flow augmentation feature assembly extends between 10 percent and 30 percent of the height from the inner passage wall toward the outer passage wall.

5. The air-cooled turbine component of any preceding claim, wherein the plurality of trip strips arranged in the ladder pattern include a plurality of first trip strips and a plurality of second trip strips, the plurality of first trip strips are oriented parallel to one another and spaced along the lengthwise axis, the plurality of second trip are oriented parallel to one another and perpendicular to the plurality of first trip strips, and a first array of the trip strips is disposed between and adjacent pair of the first trip strips.

6. The air-cooled turbine component of claim 5, wherein each of the second trip strips of the first array extends lengthwise between the adjacent pair of the first trip strips.

7. The air-cooled turbine component of claim 5 or 6, wherein each of the second trip strips of the first array is spaced from the adjacent pair of the first trip strips.

8. The air-cooled turbine component of any preceding claim, wherein the ladder pattern extends from the upstream end to the downstream end.

9. The air-cooled turbine component of any preceding claim, wherein the body forms an inlet aperture at the upstream end, the inlet aperture extending between and to the outer radial surface and the internal cooling passage.

10. The air-cooled turbine component of any preceding claim, wherein the body forms an outlet aperture at the downstream end, the outlet aperture extending between and to the internal cooling passage and an exterior of the body.

11. A blade outer air seal (BOAS) segment comprising:
a segment body extending between and to an outer radial surface and an inner radial surface relative to a BOAS axis, the segment body including an outer passage wall, an inner passage wall, a first lateral side wall, and a second lateral side wall forming an internal cooling passage between the outer radial surface and the inner radial surface, the internal cooling passage extending lengthwise through the segment body between and to an upstream end of the internal cooling passage and a downstream end of the internal cooling passage along a lengthwise axis of the internal cooling passage, the internal cooling passage extending widthwise between and to the first lateral side wall and the second lateral side wall, the segment body forming a flow augmentation feature assembly at the inner passage wall within the internal cooling passage, the flow augmentation feature assembly including a plurality of trip strips arranged in a ladder pattern along the inner passage wall extending between and to the first lateral side wall and the second lateral side wall.

12. The BOAS segment of claim 11, wherein:
the internal cooling passage has a width between the first lateral side wall and the second lateral side wall, the width is substantially orthogonal to the lengthwise axis, and the width decreases in a lengthwise direction from the upstream end to the downstream end; and/or
the internal cooling passage has a height between the outer passage wall and the inner passage wall, and the flow augmentation feature assembly extends between 10 percent and 30 percent of the height from the inner passage wall toward the outer passage wall; and/or
the plurality of trip strips arranged in the ladder pattern include a plurality of first trip strips and a plurality of second trip strips, the plurality of first trip strips are oriented parallel to one another and oblique to the first lateral side wall and the second lateral side wall, the first plurality of first trip strips extend between and to the first lateral side wall and the second lateral side wall, and the plurality of second trip are oriented parallel to one another and perpendicular to the plurality of first trip strips; and/or
the ladder pattern is a skewed ladder pattern.

13. A blade outer air seal (BOAS) segment comprising:
a segment body extending between and to an outer radial surface and an inner radial surface relative to a BOAS axis, the segment body including an outer passage wall and an inner passage wall forming an internal cooling passage between the outer radial surface and the inner radial surface, the segment body forming a flow augmentation feature assembly at the inner passage wall within the internal cooling passage, the flow augmentation feature assembly including a plurality of trip strips arranged in a ladder pattern along the inner passage wall, the plurality of trip strips arranged in the ladder pattern including a plurality of first trip strips and a plurality of second trip strips,
the plurality of first trip strips oriented parallel to and spaced from one another, and
the plurality of second trip strips oriented parallel to one another and perpendicular to the plurality of first trip strips, the plurality of second trip strips arranged as a plurality of arrays of the second trip strips, each array of the plurality of arrays including a subset plurality of the plurality of second trip strips, each array of the plurality of arrays disposed between a respective pair of adjacent first trip strips of the plurality of first trip strips.

14. The BOAS segment of claim 13, wherein the segment body extends circumferentially between a first circumferential end and a second circumferential end relative to the BOAS axis, and the internal cooling passage extends lengthwise between the first circumferential end and the second circumferential end.

15. The BOAS segment of claim 13 or 14, wherein:
the internal cooling passage has a height between the outer passage wall and the inner passage wall, and the plurality of first trip strips and the plurality of second trip strips extends between 10 percent and 30 percent of the height from the inner passage wall toward the outer passage wall; and/or
the segment body includes a first lateral side wall and a second lateral side wall further forming the internal cooling passage, the internal cooling passage extends widthwise between the first lateral side wall and the second lateral side wall, and each of the plurality of first trip strips extends between and to the first lateral side wall and the second lateral side wall; and/or
the internal cooling passage extends between and to an upstream end and a downstream end, the internal cooling passage has a width, and the width decreases from the upstream end to the downstream end.
